# EUROPEAN PATENT SPECIFICATION

(11) **EP 3 769 616 B1**
(45) Date of publication and mention of the grant of the patent: **06.09.2023**
(21) Application number: 20187743.8
(22) Date of filing: 24.07.2020
(51) Int. Cl.: A01M 7/00

(54) **APPARATUS FOR TREATMENTS, IN PARTICULAR PESTICIDE TREATMENTS, OF PLANTS AND/OR AGRICULTURAL CROPS**
VORRICHTUNG FÜR BEHANDLUNGEN, INSBESONDERE PESTIZIDBEHANDLUNGEN, VON PFLANZEN UND/ODER LANDWIRTSCHAFTLICHEN KULTUREN
APPAREIL POUR TRAITEMENTS, EN PARTICULIER DES TRAITEMENTS PESTICIDES, DE PLANTES ET/OU DE CULTURES AGRICOLES

(30) Priority: 26.07.2019 IT 201900013068
(43) Date of publication of application: 27.01.2021
(73) Proprietor: Martignani Ing. C. Di Martignani Stefano & C. S.r.l., 48020 Sant'Agata Sul Santerno (IT)
(72) Inventor: MARTIGNANI, Claudio, 48022 LUGO (RA) (IT); MARTIGNANI, Stefano, 48022 LUGO (RA) (IT)
(74) Representative: Scipioni, Luca

(56) References cited:
- WO-A1-2013/130007
- SE-A1- 1 250 199
- US-A- 2 583 753
- US-A- 3 369 754
- US-A- 3 403 856

## Description

### CROSS-REFERENCE TO RELATED APPLICATIONS

This patent application claims priority from Italian patent application no. 102019000013068 filed on 26/07/2019.

### TECHNICAL FIELD

This invention relates to an apparatus for treatments, in particular pesticide treatments, of plants and/or agricultural crops.

In particular, this invention relates to an apparatus for treatments, in particular pesticide treatments, of plants and/or agricultural crops of the type comprising a tank for containing a powder or granule product; and a pneumatic feeding device comprising, in turn, at least one outlet to feed the product to the outside, an impeller to generate an air flow, and a pneumatic circuit to connect the impeller and the outlet together.

The tank comprises a hopper provided with a discharge opening connected to the pneumatic circuit; a valve device to selectively control the feeding of the product into the pneumatic circuit through the discharge opening; and a mixing device mounted inside the hopper to mix the product, prevent the formation of lumps in the product, and ensure the correct dosage of the product into the pneumatic circuit.

### BACKGROUND ART

The known apparatuses for treatments, in particular pesticide treatments, of plants and/or agricultural crops of the type described above have some drawbacks mainly due to the fact that the valve and mixing devices make such apparatuses relatively complex and expensive. State of the art documents in this field are for example: US 2 583 753 A, US 3 369 754 A, US 3 403 856 A, SE 1 250 199 A1.

### DISCLOSURE OF INVENTION

The object of this invention is to provide an apparatus for treatments, in particular pesticide treatments, of plants and/or agricultural crops, which is without the above-described drawbacks and which is easy and cheap to implement.

According to this invention, there is provided an apparatus for treatments, in particular pesticide treatments, of plants and/or agricultural crops according to what is set forth in the attached claims.

### BRIEF DESCRIPTION OF THE DRAWINGS

This invention will now be described with reference to the accompanying drawings, which illustrate a non-limiting embodiment thereof, wherein:
Figures 1 and 2 are two schematic perspective views of a preferred embodiment of the apparatus of this invention;
Figure 3 is a perspective view of a first detail of the apparatus in Figures 1 and 2;

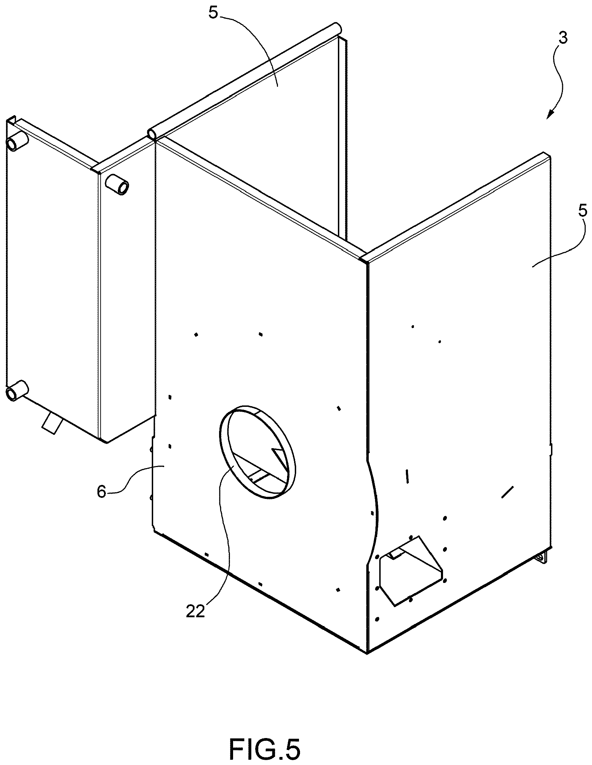

Figures 4 and 5 are two perspective views of a second detail of the apparatus in Figures 1 and 2; and
Figure 6 is a perspective view of a detail in Figures 4 and 5.

### BEST MODE FOR CARRYING OUT THE INVENTION

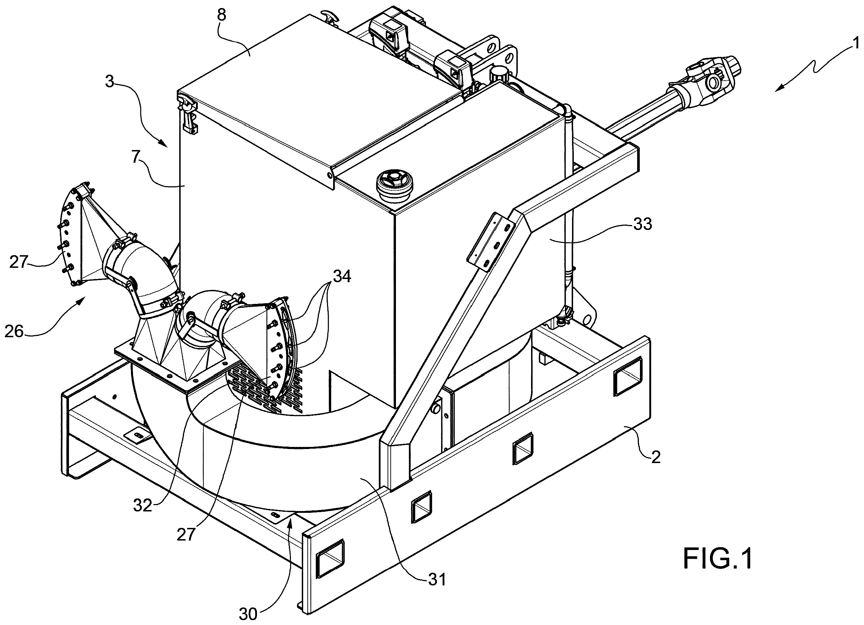

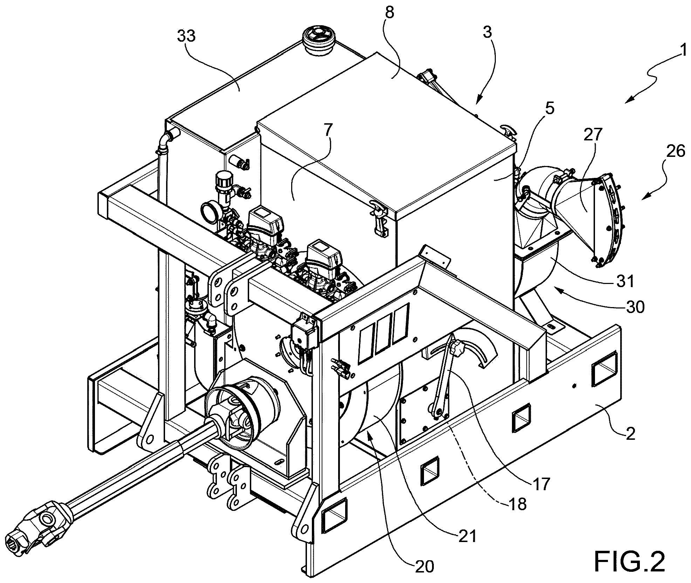

With reference to Figures 1 and 2, number 1 indicates, as a whole, an apparatus for treatments, in particular pesticide treatments, of plants and/or agricultural crops.

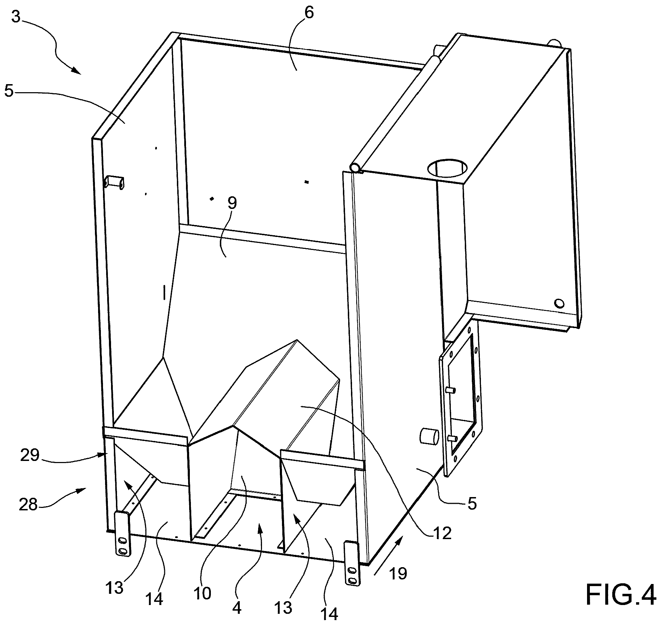

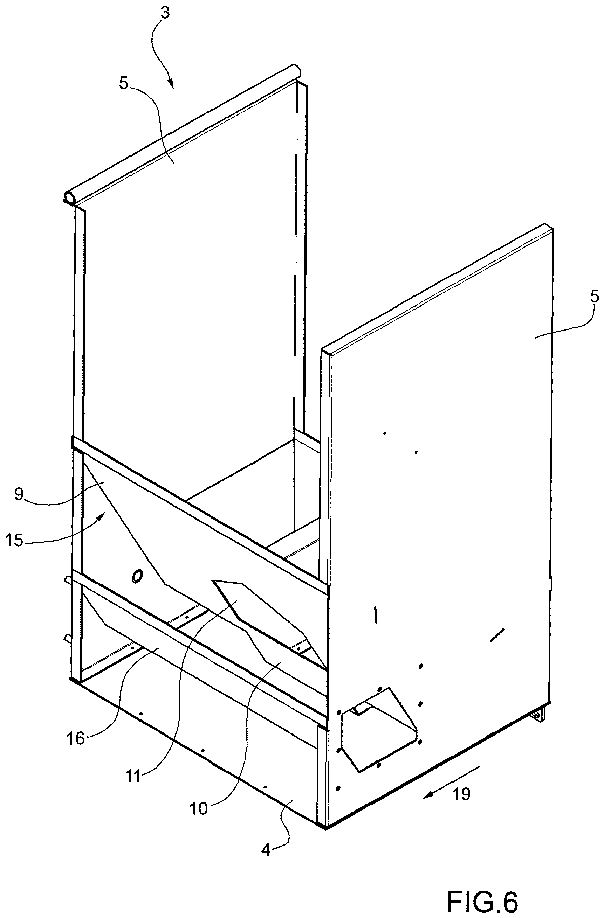

The apparatus 1 comprises a frame 2; and a container 3, which is fixed to the frame 2, has a substantially parallelepiped shape, and is delimited by a substantially flat horizontal bottom wall 4 (Figures 4 and 6), two substantially flat and parallel vertical side walls 5, and two substantially flat and parallel vertical front walls 6, 7.

The container 3 is closed at the top by a lid 8 configured to allow personnel to access the inside of the container 3.

As illustrated in Figures 4 and 6, the container 3 houses an inclined wall 9 inside, which has an upper edge fixed to the wall 6, extends downwards and towards the wall 4, and has a lower edge arranged at a given distance from the wall 4.

The plate 9 is also provided with a central flap 10, which protrudes from the lower edge of the plate 9, and is arranged substantially in contact with the wall 4.

The plate 9 also has a central opening 11, which is formed above the flap 10, and is connected to a central tunnel 12, which has a width substantially equal to the width of the opening 11, extends upwards from the wall 4, and is arranged in contact with the wall 7.

The tunnel 12 defines two side feeding channels 13 inside the container 3, which extend on opposite sides of the tunnel 12, and define a tank 14 for containing a powder or granule product that can be loaded into the channels 13 through the lid 8.

The channels 13 flow into a collection manifold 15 formed below the plate 9 and connected to the tunnel 12 through the opening 11.

The channels 13 are also connected with a closing plate 16, which extends between the walls 5, and is hinged to the walls 5 to rotate, with respect to the container 3 and under the thrust of a crank 17 outside the container 3, about a fulcrum axis 18 transverse to a forward direction 19 along the tunnel 12 and the channels 13.

The plate 16 is mobile about the axis 18 between an opening position, where the channels 13 communicate with the manifold 15, and a closing position, where the two channels 13 are separated from the manifold 15 by the plate 16.

The apparatus 1 also comprises a centrifugal fan 20 provided with a volute 21 fixed to the wall 6 and connected to the manifold 16 via a central opening 22 formed through the wall 6.

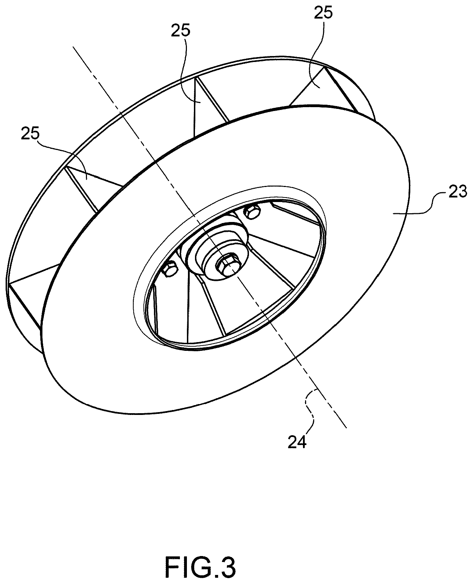

The fan 20 also comprises an impeller 23 (Figure 3), which is mounted so as to rotate about a rotation axis 24 that is parallel to the direction 19, and is provided with a plurality of substantially flat blades 25, which are uniformly distributed about the axis 24, and are radial and coplanar to the axis 24.

The fan 20 defines part of a pneumatic feeding device 26 for feeding the product contained in the tank 14 to the outside.

The device 26 further comprises, in this case, two dispensing mouths 27 and a pneumatic circuit 28 comprising a first branch 29 defined by the tunnel 12, by the channels 13, and by the manifold 15 and a second branch 30 defined by a duct 31 extending between the volute 21 and the mouths 27.

The duct 31 comprises two feeding channels (not shown), each of which is connected to a corresponding mouth 27, and is provided with a valve device (not illustrated) mounted to selectively connect the corresponding feeding channel (not illustrated) and, therefore, the corresponding mouth 27 with the volute 21.

In use, when the fan 20 is activated and the plate 16 is arranged in its opening position, the air is sucked from the outside inside the tunnel 12 and the channels 13 through a suction grille 32 formed across the wall 7.

At this point, the air flow fed along the tunnel 12 and the air and product mixtures fed along the channels 13 are advanced first of all inside the manifold 15 and the volute 21 and then along the duct 31 and the mouths 27.

The apparatus 1 also comprises a tank 33 for containing water and, for each mouth 27, at least one corresponding dispensing nozzle 34 hydraulically connected to the tank 33 to feed water into the mixture of air and product exiting from the mouth 27.

The atomized mixture fed through the mouths 27 is electrostatically charged with an electric charge of a given sign by an electric device, which is known and not shown, comprising, for each mouth 27, a corresponding electrode defined by a plate, which is made of conductive metal, and is fixed inside the mouth 27.

Following the electrostatic charging of the atomized mixture, the plant or agricultural crop being treated takes on an electric charge of the sign opposite that of the atomized mixture, which is deposited, thus, on the agricultural crop facilitated by the electrostatic force of attraction that is generated between the opposite electric charges.

According to a variant not shown, the apparatus 1 also comprises a tank for containing a pesticide liquid product; for each mouth 27, at least one corresponding dispensing nozzle for feeding the pesticide liquid product into the air flow advanced by the fan 20 through the mouth 27; and a valve device for selectively connecting the tank to the dispensing nozzles.

The pesticide liquid product is fed to the corresponding dispensing nozzles when the plate 16 is arranged in its closing position or when the tank 14 is empty, while the powder or granule product contained in the tank 14 is fed to the mouths 27 when the valve device mentioned above is closed and prevents the pesticide liquid product from reaching the corresponding dispensing nozzles.

Thus, the user has an integrated apparatus that is able to perform treatments, in this case pesticide treatments with an electrostatic charge, both with liquid pesticide products, and with powder or granule pesticide products.

The apparatus 1 has some advantages mainly due to the fact that the mixing in the manifold 15 of the air flow fed along the tunnel 12, and of the air and product mixtures fed along the channels 13 allows to prevent the formation of lumps in the powder or granule product and to guarantee the correct dosage of the powder or granule product in a relatively simple and cheap manner.

## Claims

1. An apparatus for treatments, in particular pesticide treatments, of plants and/or agricultural crops, the apparatus comprising a first tank (14) to contain a powder or granule product; and a pneumatic feeding device (26) comprising at least one dispensing mouth (27) to distribute the powder or granule product to the outside, an impeller (23) to create an air flow and feed it through the first tank (14) and to the dispensing mouths (27), and a pneumatic circuit (28) having a first branch (29) to connect the first tank (14) and the impeller (23) to one another and a second branch (30) to connect the impeller (23) and the dispensing mouths (27) to one another; the first branch (29) comprising at least one first feeding channel (13) obtained through the first tank (14) so as to draw the powder or granule product, a second feeding channel (12) obtained on the outside of the first tank (14), and a collection manifold (15) obtained between the two feeding channels (13, 12) and the impeller (23) so as to receive, at the inlet, the mixture of air and powder or granule product fed along the first feeding channel (13) and the air flow fed along the second feeding channel (12) and so as to feed, at the outlet, to the impeller (23) a mixture of air and powder or granule product; and being **characterized in that** each first feeding channel (13) is delimited by a bottom wall (4) of the first tank (14).

2. An apparatus according to claim 1, wherein the first feeding channel (13) is separate from the second feeding channel (12) so as to directly feed the powder or granule product into the collection manifold (15).

3. An apparatus according to any one of the preceding claims and comprising two first feeding channels (13), which are obtained through the first tank (14) so as to draw the powder or granule product, are arranged on opposite sides of the second feeding channel (12) and are connected to the collection manifold (15).

4. An apparatus according to any one of the preceding claims and further comprising a first valve device (16, 17), which is movable between an opening position, in which each first feeding channel (13) is connected to the collection manifold (15), and a closing position, in which each first feeding channel (13) is separate from the collection manifold (15).

5. An apparatus according to any one of the preceding claims and further comprising a second tank (33) to contain water and a first hydraulic circuit connected to the second tank (33) and comprising, for each dispensing mouth (27), at least one respective first dispensing nozzle (34) to feed water into the mixture of air and powder or granule product fed through the dispensing mouth (27) and generate an atomized mixture.

6. An apparatus according to claim 5 and further comprising an electric device to electrically charge the mixture of air and powder or granule product fed through the dispensing mouths (27).

7. An apparatus according to any one of the preceding claims, wherein the impeller (23) is mounted so as to rotate around a rotation axis (24) and is provided with a plurality of radial blades (25), which are substantially flat and coplanar to the rotation axis (24).

8. An apparatus according to any one of the preceding claims and further comprising a third tank to contain a pesticide liquid and a second hydraulic circuit connected to the third tank and comprising, for each dispensing mouth (27), at least one respective second dispensing nozzle to feed the pesticide liquid into the dispensing mouth (27).

9. An apparatus according to claim 8, when dependent on claim 4, and further comprising a second valve device configured to selectively control the feeding of the pesticide liquid and to allow the pesticide liquid to be fed to the second dispensing nozzles when the first valve device (16, 17) is arranged in its closing position or the first tank (14) is empty.

## Patentansprüche

1. Vorrichtung für Behandlungen, insbesondere Pestizidbehandlungen, von Pflanzen und/oder landwirtschaftlichen Kulturen, wobei die Vorrichtung einen ersten Tank (14) umfasst, um ein Pulver- oder Granulatprodukt zu enthalten, und ein pneumatisches Zuführungsgerät (26), das mindestens eine Ausgabeöffnung (27) umfasst, um das Pulver- oder Granulatprodukt auszubringen, ein Flügelrad (23), um einen Luftstrom zu erzeugen und diesen durch den ersten Tank (14) und den Ausgabeöffnungen (27) zuzuführen, und einen Pneumatikkreislauf (28), aufweisend einen ersten Abzweig (29), um den ersten Tank (14) und das Flügelrad (23) miteinander zu verbinden, und einen zweiten Abzweig (30), um das Flügelrad (23) und die Ausgabeöffnungen (27) miteinander zu verbinden, wobei der erste Abzweig (29) mindestens einen ersten Zuführungskanal (13) umfasst, der durch den ersten Tank (14) ausgebildet ist, sodass das Pulver- oder Granulatprodukt angesaugt wird, einen zweiten Zuführungskanal (12), der auf der Außenseite des ersten Tanks (14) ausgebildet ist, und ein Sammelrohr (15), das zwischen den beiden Zuführungskanälen (13, 12) und dem Flügelrad (23) ausgebildet ist, sodass die Mischung aus Luft und Pulver- oder Granulatprodukt, die entlang des ersten Zuführungskanals (13) zugeführt wird, und der Luftstrom, der entlang des zweiten Führungskanals (12) zugeführt wird, empfangen werden und sodass dem Flügelrad (23) am Auslass eine Mischung aus Luft und Pulver- oder Granulatprodukt zugeführt wird, **dadurch gekennzeichnet, dass** ein jeder erster Zuführungskanal (13) durch eine Bodenwand (4) des ersten Tanks (14) begrenzt ist.

2. Vorrichtung nach Anspruch 1, wobei der erste Zuführungskanal (13) vom zweiten Zuführungskanal (12) getrennt ist, sodass das Pulver- oder Granulatprodukt direkt dem Sammelrohr (15) zugeführt wird.

3. Vorrichtung nach einem der vorhergehenden Ansprüche und umfassend zwei erste Zuführungskanäle (13), die durch den ersten Tank (14) ausgebildet sind, sodass das Pulver- oder Granulatprodukt angesaugt wird, die auf entgegengesetzten Seiten des zweiten Zuführungskanals (12) angeordnet und mit dem Sammelrohr (15) verbunden sind.

4. Vorrichtung nach einem der vorhergehenden Ansprüche und zudem umfassend ein erstes Ventilgerät (16, 17), das zwischen einer Öffnungsposition, in der ein jeder erster Zuführungskanal (13) mit dem Sammelrohr (15) verbunden ist, und einer Schließposition, in der ein jeder erster Zuführungskanal (13) vom Sammelrohr (15) getrennt ist, bewegbar ist.

5. Vorrichtung nach einem der vorhergehenden Ansprüche und zudem umfassend einen zweiten Tank (33), um Wasser zu enthalten, und einen ersten Hydraulikkreislauf, der mit dem zweiten Tank (33) verbunden ist und für jede Ausgabeöffnung (27) mindestens eine jeweilige erste Ausgabedüse (34) umfasst, um Wasser der Mischung aus Luft und Pulver- oder Granulatprodukt, die durch die Ausgabeöffnung (27) zugeführt wird, zuzuführen und eine vernebelte Mischung zu erzeugen.

6. Vorrichtung nach Anspruch 5 und zudem umfassend ein elektrisches Gerät, um die Mischung aus Luft und Pulver-oder Granulatprodukt, die durch die Ausgabeöffnungen (27) zugeführt wird, elektrisch zu laden.

7. Vorrichtung nach einem der vorhergehenden Ansprüche, wobei das Flügelrad (23) so montiert ist, dass es sich rund um eine Rotationsachse (24) dreht, und mit einer Vielzahl von radialen Schaufeln (25) versehen ist, die im Wesentlichen flach und in der gleichen Ebene der Rotationsachse (24) liegend angeordnet sind.

8. Vorrichtung nach einem der vorhergehenden Ansprüche und zudem umfassend einen dritten Tank, um eine Pestizidflüssigkeit zu enthalten, und einen zweiten Hydraulikkreislauf, der mit dem dritten Tank verbunden ist, und umfassend für jede Ausgabeöffnung (27) mindestens eine jeweilige zweite Ausgabedüse, um der Ausgabeöffnung (27) die Pestizidflüssigkeit zuzuführen.

9. Vorrichtung nach Anspruch 8, wenn abhängig von Anspruch 4, und zudem umfassend ein zweites Ventilgerät, das ausgelegt ist, um die Zuführung der Pestizidflüssigkeit selektiv zu steuern und zu erlauben, dass die Pestizidflüssigkeit den zweiten Ausgabedüsen zugeführt wird, wenn das erste Ventilgerät (16, 17) in seiner Schließposition angeordnet ist oder der erste Tank (14) leer ist.

## Revendications

1. Appareil pour traitements, en particulier des traitements pesticides, de plantes et/ou de cultures agricoles, l'appareil comprenant un premier réservoir (14) pour contenir un produit en poudre ou en granulés ; et un dispositif d'alimentation pneumatique (26) comprenant au moins une bouche de distribution (27) pour distribuer le produit en poudre ou en granulés à l'extérieur, une roue (23) pour créer un flux d'air et l'alimenter à travers le premier réservoir (14) et aux bouches de distribution (27), et un circuit pneumatique (28) comportant une première branche (29) pour relier le premier réservoir (14) et la roue (23) l'un à l'autre et une deuxième branche (30) pour relier la roue (23) et les bouches de distribution (27) l'une aux autres ; la première branche (29) comprenant au moins un premier canal d'alimentation (13) obtenu à travers le premier réservoir (14) de sorte à aspirer le produit en poudre ou en granulés, un deuxième canal d'alimentation (12) obtenu sur l'extérieur du premier réservoir (14) et un collecteur de collecte (15) obtenu entre les deux canaux d'alimentation (13, 12) et la roue (23) de manière à recevoir, à l'entrée, le mélange d'air et de produit en poudre ou en granulés alimenté le long du premier canal d'alimentation (13) et le flux d'air alimenté le long du deuxième canal d'alimentation (12) et de manière à alimenter, à la sortie, vers la roue (23) un mélange d'air et le produit en poudre ou en granulé ; et étant **caractérisé en ce que** chaque premier canal d'alimentation (13) est délimité par une paroi de fond (4) du premier réservoir (14).

2. Appareil selon la revendication 1, dans lequel le premier canal d'alimentation (13) est séparé du deuxième canal d'alimentation (12) de manière à alimenter directement le collecteur de collecte (15) en produit en poudre ou en granulés.

3. Appareil selon l'une quelconque des revendications précédentes et comprenant deux premiers canaux d'alimentation (13), étant obtenus à travers le premier réservoir (14) de manière à aspirer le produit en poudre ou en granulés, disposés de part et d'autre du deuxième canal d'alimentation (12) et étant reliés au collecteur de collecte (15).

4. Appareil selon l'une quelconque des revendications précédentes et comprenant de plus un premier dispositif de soupape (16, 17), étant mobile entre une position d'ouverture, dans laquelle chaque premier canal d'alimentation (13) est relié au collecteur de collecte (15), et une position de fermeture, dans laquelle chaque premier canal d'alimentation (13) est séparé du collecteur de collecte (15).

5. Appareil selon l'une quelconque des revendications précédentes et comprenant de plus un deuxième réservoir (33) pour contenir de l'eau et un premier circuit hydraulique relié au deuxième réservoir (33), et comprenant, pour chaque bouche de distribution (27), au moins une première buse de distribution (34) respective pour alimenter de l'eau dans le mélange d'air et de produit en poudre ou en granulés alimenté par la bouche de distribution (27) et générer un mélange atomisé.

6. Appareil selon la revendication 5 et comprenant de plus un dispositif électrique pour charger électriquement le mélange d'air et de produit en poudre ou en granulés alimenté par les bouches de distribution (27).

7. Appareil selon l'une quelconque des revendications précédentes, dans lequel la roue (23) est montée de manière à tourner autour d'un axe de rotation (24) et est pourvue d'une pluralité de pales radiales (25), qui sont essentiellement plates et coplanaires par rapport à l'axe de rotation (24).

8. Appareil selon l'une quelconque des revendications précédentes et comprenant de plus un troisième réservoir pour contenir un liquide pesticide et un deuxième circuit hydraulique relié au troisième réservoir et comprenant, pour chaque bouche de distribution (27), au moins une deuxième buse de distribution respective pour alimenter le liquide pesticide dans la bouche de distribution (27).

9. Appareil selon la revendication 8, lorsqu'elle dépend de la revendication 4, et comprenant de plus un deuxième dispositif de soupape configuré pour commander sélectivement l'alimentation du liquide pesticide et pour permettre au liquide pesticide d'être alimenté vers les deuxièmes buses de distribution lorsque le premier dispositif de soupape (16, 17) est disposé dans sa position de fermeture ou que le premier réservoir (14) est vide.
